# EUROPÄISCHE PATENTSCHRIFT

(11) **EP 1 066 908 B1**
(45) Veröffentlichungstag und Bekanntmachung des Hinweises auf die Patenterteilung: **02.07.2003**
(21) Anmeldenummer: 00122524.2
(22) Anmeldetag: 01.04.1998
(51) Int. Cl.: B23F 21/26, B23F 1/08

(54) **Vorrichtung zum Herstellen von Teilen mit Aussenprofil**
Device for manufacturing parts with an outer profile
Dispositif de fabrication de pièces à profil extérieur

(30) Priorität: 09.04.1997 DE 29706274 U
(43) Veröffentlichungstag der Anmeldung: 10.01.2001
(62) Teilanmeldung aus: 98919201.8
(73) Patentinhaber: Eckgold, Roland, 42553 Velbert (DE)
(72) Erfinder: Eckgold, Roland, 42553 Velbert (DE)
(74) Vertreter: Weisse, Jürgen, Dipl.-Phys.

(56) Entgegenhaltungen:
- DE-A- 3 018 915
- DE-A- 4 228 308
- DE-C- 594 621
- DE-C- 896 904
- DE-U- 8 915 215
- DE-U- 9 407 708
- FR-A- 1 580 753
- US-A- 2 461 320
- US-A- 2 511 298
- US-A- 4 797 986
- US-A- 5 105 697
- PATENT ABSTRACTS OF JAPAN vol. 6, no. 14 (M-108), 27. Januar 1982 (1982-01-27) -& JP 56 134126 A (TAIHO KOGYO CO LTD), 20. Oktober 1981 (1981-10-20)
- PATENT ABSTRACTS OF JAPAN vol. 11, no. 98 (M-575), 2. März 1987 (1987-03-02) & JP 61 249210 A (KOBE STEEL LTD), 6. November 1986 (1986-11-06)

## Beschreibung

### Technisches Gebiet

Die Erfindung betrifft eine Vorrichtung zum Herstellen von Teilen nach dem Oberbegriff des Anspruchs 1.

### Zugrundeliegender Stand der Technik

Solche Vorrichtungen sind beispielsweise bekannt durch die US-A-2,674,924, die US-A-2,547,509, die US-A-2,461,320, oder die DE-OS-2 259 120.

Bei den vorerwähnten bekannten Vorrichtungen bildet das Schneidwerkzeug ein geschlossenes Rohr. In dem Rohr sind zwischen den Schneidkanten Spankammern zur Aufnahme von Spänen gebildet.

Durch das DE-U-94 07 708.8 und das den nächstkommenden Stand der Tachnik beschreibenden DE-U-89 15 215.8 sind Vorrichtungen der eingangs genannten Art bekannt, bei welcher das Schneidwerkzeug eine Mehrzahl von Ringscheiben aufweist, welche die Schneidkanten bilden und durch Abstandsstücke im Abstand voneinander gehalten sind. Die Abstandsstücke sind dabei jeweils von zwei rechteckigen, in seitlichem Abstand voneinander angeordneten Platten gebildet, die zwischen sich einen mit dem Außenraum in Verbindung stehenden Kanal bilden. Über diesen Kanal können Späne abgeführt werden. Bei diesen bekannten Anordnungen kann die Abfuhr der Späne zwischen jedem Paar von Schneidkanten in zwei gegenüberliegenden Radialrichtungen erfolgen.

### Offenbarung der Erfindung

Der Erfindung die Aufgabe zu Grunde, bei einer Vorrichtung der eingangs genannten Art eine sichere Halterung des Werkstücks an dem Druckstück zu gewährleisten. Insbesondere soll es möglich sein, auch kleine Werkstücke sicher an dem Druckstück zu haltern und mit einer Vorrichtung der eingangs genannten Art zu bearbeiten.

Eine sichere Halterung des Werkstücks an dem Druckstück wird bei einer Vorrichtung der eingangs erwähnten Art durch die Merkmale im kennzeichnenden Teil des Anspruchs 1 gewährleistet.

Das Werkstück wird dann zwischen dem Druckstück und dem Gegenhalter festgeklemmt. Die auf das Druckstück und über dieses auf das Werkstück wirkende Kraft überwindet die Kraft des Gegenhalters. Dadurch wird der Gegenhalter bei der Bewegung des Werkstücks durch das Schneidwerkzeug zurückgedrückt Durch das Festklemmen können auch ziemlich kleine Werkstücke sicher und in definierter Lage an dem Druckstück gehaltert werden.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.

### Kurze Beschreibung der Zeichnungen

- Fig.1: ist eine schematische Darstellung einer Vorrichtung zum Herstellen von Teilen, die mit einem Außenprofil versehen sind, beispielsweise von Zahnrädern.
- Fig.2: ist eine Axialansicht eines Schneidwerkzeugs bei einer Vorrichtung von Fig.1.
- Fig.3: zeigt einen Längsschnitt durch das Schneidwerkzeug von Fig.2.
- Fig.4: ist eine schematische Darstellung mit einem Hydraulikschaltbild und zeigt die Erzeugung der Andruckkraft des Gegenhalters.
- Fig.5: zeigt im einzelnen den Gegenhalter mit Kanälen zum Zuführen eines Spülmittels zum Entfernen der Späne.
- Fig.6: zeigt einen Längsschnitt durch mit einem nachgeschalteten Kalibrierwerkzeug versehenes Schneidwerkzeug.

### Bevorzugte Ausführung der Erfindung

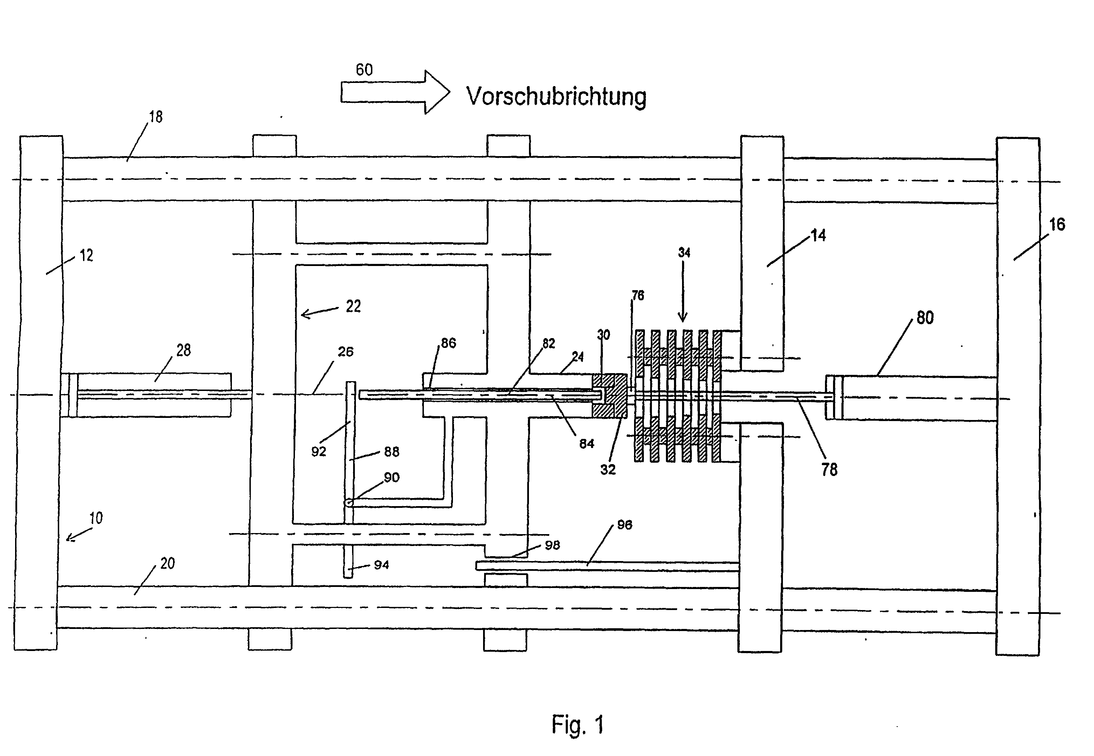

In Fig.1 ist mit 10 ein Maschinengestell mit drei Traversen 12, 14 und 16 und zwei parallelen Führungssäulen 18 und 20 bezeichnet. Auf den Führungssäulen 18 und 20 ist ein Schlitten 22 geführt. An dem Schlitten 22 sitzt ein Druckstück 24. Das Druckstück 24 ist koaxial zu einer Achse 26, die in der Mitte des Maschinengestells 10 parallel zu den Führungssäulen 18 und 20 verläuft. Ein Hydraulik-Zylinder 28, der ebenfalls zu der Achse 26 ausgerichtet ist, stützt sich an der Traverse 12 ab und greift an dem Schlitten 22 an. Der Hydraulik-Zylinder 28 kann den Schlitten 22 längs der Führungssäulen 18 und 20 verschieben. Dabei kann der Hydraulik-Zylinder 28 eine große Druckkraft nach rechts in Fig.1 auf den Schlitten 22 ausüben. Durch den Hydraulik-Zylinder 28 kann der Schlitten 22 auch wieder nach links in Fig. 1 zurückgefahren werden.

An dem Druckstück 24 sitzt eine Halterung 30. Die Halterung 30 hält ein Werkstück 32.

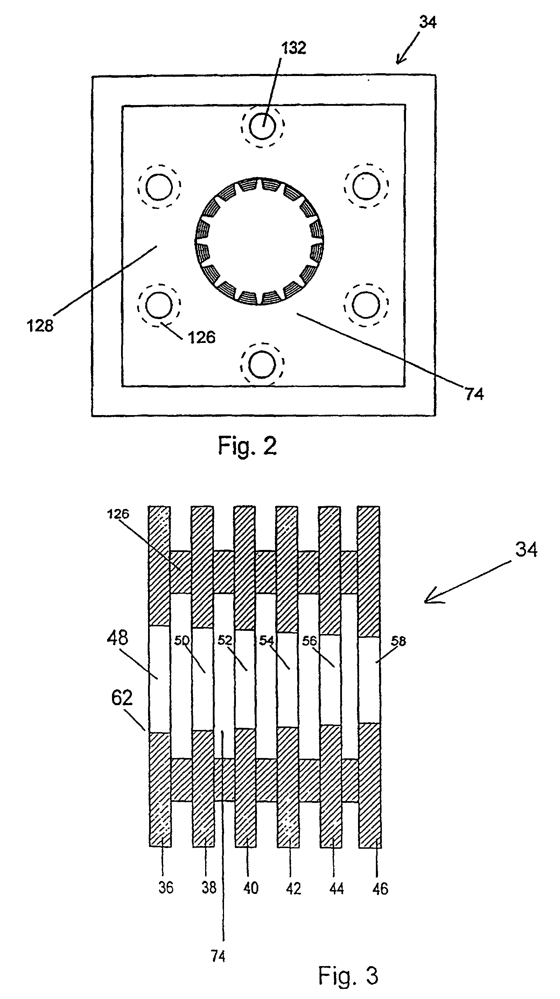

An der Traverse 14 ist ein Schneidwerkzeug 34 gehaltert. Das Schneidwerkzeug 34 ist ebenfalls koaxial zu der Achse 26 angeordnet. Das Schneidwerkzeug 34 ist am besten aus Fig.2 und 3 ersichtlich. Das Schneidwerkzeug 34 enthält eine Mehrzahl von Ringscheiben 36, 38, 40, 42, 44 und 46. Die Ringscheiben 36, 38, 40, 42, 44 und 46 weisen profilierte Durchbrüche 48, 50, 52, 54, 56 bzw. 58. Die Durchbrüche 48, 50, 52, 54, 56 und 58 sind stufenweise enger. Der in Vorschubrichtung 60 erste Durchbruch 48 ist der weiteste, der in Vorschubrichtung 60 letzte Durchbruch ist der engste. Die Durchbrüche 48 bis 58 nähern sich dabei zunehmend einem gewünschten Profil des fertigen Teiles, z.B. eines Zahnrades, an. Die Durchbrüche bilden Schneidkanten 62. Mittels dieser Schneidkanten 62 werden von dem Werkstück 32 Späne abgenommen. Dabei ergibt sich beispielsweise nach Durchgang durch die Ringscheibe 36 eine schwach wellige Umfangskontur, die dann nach Durchgang durch die Scheiben 38, 40, 42 und 44 immer tiefer wird, bis schließlich nach Durchgang durch die letzte Ringscheibe 46 das gewünschte Zahnradprofil erhalten wird. Auf die gleiche Weise können auch Teile mit fast beliebigen anderen Konturen erhalten werden.

Die Ringscheiben 36, 38, 40, 42, 44 und 46 sind durch Abstandsstücke im Abstand voneinander gehalten. Dadurch werden zwischen den Ringscheiben Spankammern 74 gebildet. Die Abstandsstücke sind, wie noch erläutert wird, so geformt, daß die Spankammern 74 zwischen den Abstandsstücken hindurch mit dem Außenraum verbunden sind.

Wie aus Fig.1 ersichtlich ist, wird das Werkstück 32 an der Halterung 30 durch einen Gegenhalter 76 gehalten. Der Gegenhalter 76 sitzt an der Kolbenstange 78 eines mit Druckmittel betriebenen, vorzugsweise pneumatischen, Hubzylinders 80. Der Gegenhalter 76 und der Hubzylinder 80 sind ebenfalls nach der Achse 26 ausgerichtet. Der Gegenhalter 76 wird von dem Hubzylinder 80 entgegen der Vorschubrichtung 60 durch das Schneidwerkzeug 34 hindurchgefahren und legt sich an das Werkstück 32 an. Wenn dann der Schlitten 22 durch den Hydraulik-Zylinder 28 in Vorschubrichtung 60 nach rechts in Fig.1 bewegt wird, überwindet die Kraft des Hydraulik-Zylinders 28 die Kraft des Hubzylinders 80. Der Gegenhalter 76 wird dann mit dem Druckstück 24 und dem Werkstück 32 gegen die Kraft des Hubzylinders 80 nach rechts zurückbewegt. Dabei bleibt der Gegenhalter 76 mit konstanter Kraft in Anlage an dem Werkstück.

Bei dieser Bewegung wird das Werkstück 32 in der oben beschriebenen Weise durch das Schneidwerkzeug spanabhebend bearbeitet. Der Gegenhalter 76 stellt sicher, daß das Werkstück 32 dabei in fester Position zu der Halterung 30 und damit zu dem Schneidwerkzeug 34 gehalten wird. Das gilt auch, wenn relativ kleine Werkstücke zu bearbeiten sind.

Wenn das fertig bearbeitete Werkstück 32 am rechten Ende in Fig.1 austritt, wird der Gegenhalter 76 zurückgefahren und das Werkstück 32 durch einen Auswerfer 82 aus der Halterung 30 herausgedrückt. Der Auswerfer 82 enthält eine Stange 84. Die Stange 84 erstreckt sich durch eine zentrale Längsbohrung 86 des Druckstücks 24 und der Halterung 30. Die Stange 84 ragt auf der dem Werkstück 32 abgewandten Seite aus der Längsbohrung 86 heraus. An dem Schlitten 22 oder dem Druckstück 24 ist ein zweiarmiger Hebel 88 um einen Schwenkpunkt 90 schwenkbar gelagert. Der Hebel 88 hat einen an der Stange 84 anliegenden längeren Hebelarm 92 und einen nach unten in Fig.1 ragenden kürzeren Hebelarm 94. An der Traverse 14 ist eine Stange 96 angebracht. Die Stange 96 erstreckt sich parallel zu den Führungssäulen 18 und 20 und durch einen Durchbruch 98 des Schlittens 22. Die Stange 96 ragt in die Bahn des kürzeren Hebelarmes 94 des Hebels 88. Wenn der Schlitten 22 mit dem Werkstück 32 die Auswurfstellung erreicht hat, in welcher das Werkstück 32 ausgeworfen werden soll, kommt der Hebelarm 94 an der Stange 96 zur Anlage. Dadurch wird der doppelarmige Hebel 88 im Uhrzeigersinn in Fig.1 verschwenkt und schiebt mit dem längeren Hebelarm 92 die Stange 84 nach rechts in Fig.1. Dadurch wird das bearbeitete Werkstück 32 ausgeworfen.

Aus Fig.2 ist die Ausbildung und Anordnung der Abstandsstücke zwischen den einzelnen Ringscheiben 36, 38, 40, 42, 44 und 46 des Schneidwerkzeugs 34 ersichtlich. Die Abstandsstücke sind ringförmige Abstandsscheiben 126, die in einem Kranz in regelmäßiger Anordnung um die Achse 26 herum angeordnet sind. Bei der dargestellten Ausführung sind sechs solche Abstandsscheiben 126 vorgesehen. Zwischen diesen Abstandsscheiben 126 sind Verbindungs-Öffnungen 128 gebildet, welche die zwischen den Ringscheiben 36, 38, 40, 42, 44 und 46 des Schneidwerkzeugs 34 gebildeten Spankammern 74 mit dem Außenraum verbinden. Bolzen 132 sind durch die Ringscheiben 36, 38, 40, 42, 44 und 46 und die Abstandsscheiben 126 geführt und halten das Schneidwerkzeug 34 zusammen. Die Abstandsscheiben 126 nehmen einen wesentlich kleineren Winkelbereich um die Achse des Schneidwerkzeugs 34 ein als die Verbindungs-Öffnungen 128. Dadurch sind die Spankammern 74 praktisch nach allen Seiten hin offen.

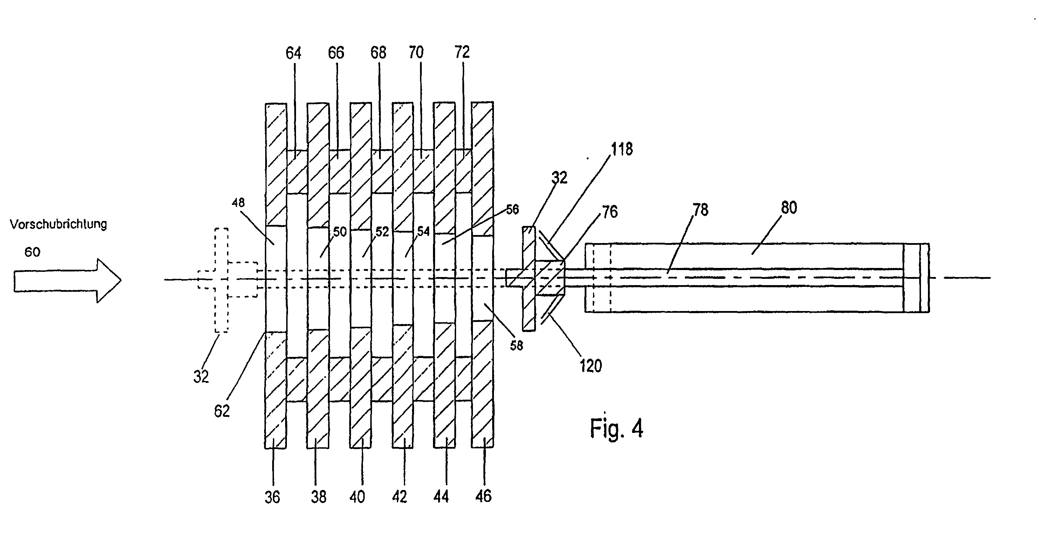

Wie aus Fig.4 ersichtlich ist, sind in der Kolbenstange 78 Kanäle für ein Spülmittel, beispielsweise Druckluft, geführt. Die Kanäle enden in Düsen 118, 120, die an dem Gegenhalter 76 sitzen und auf die Außenränder des Werkstückes 32 gerichtet sind. An diesen Rändern werden durch das Schneidwerkzeug 34 die Späne abgenommen. Diese Späne werden durch das Spülmittel (Druckluft) weggeblasen und aus den jeweiligen Spankammern 74 zwischen den Abstandsstücken 126 dieser Spankammer hindurch unmittelbar nach außen befördert.

Es ist auch möglich, daß der Gegenhalter (76) Schmiermittelkanäle aufweist, über welche in ähnlicher Weise ein Schmiermittel auf das Werkstück (32) geleitet wird.

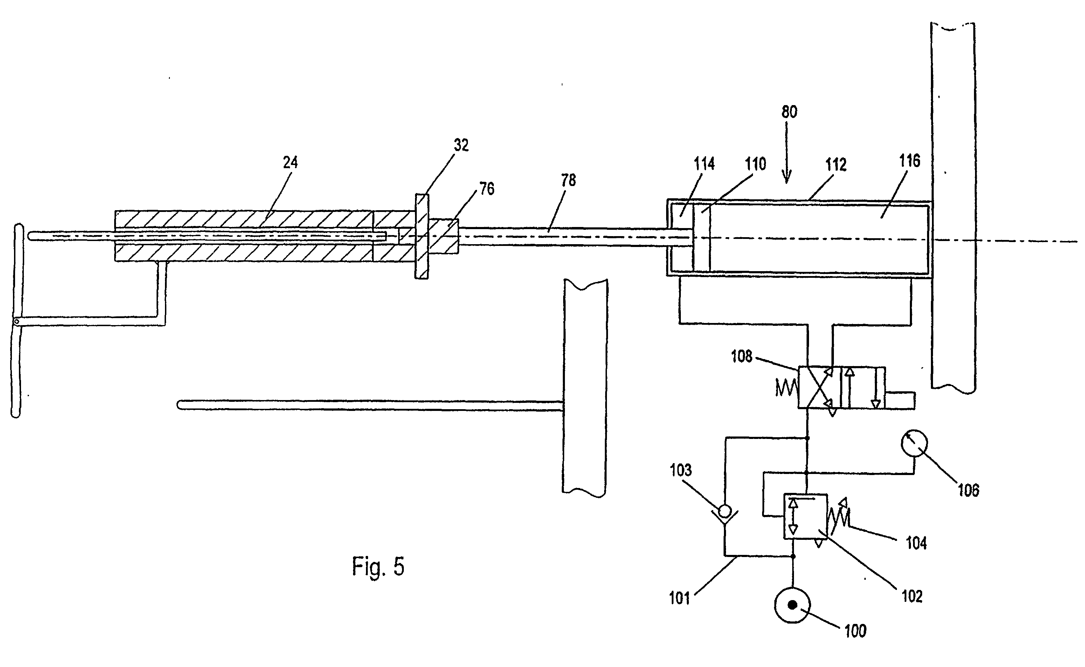

Fig.5 zeigt die Erzeugung der konstanten Andruckkraft des Gegenhalters 76.

Mit 100 ist eine Druckmittelquelle, z.B. eine übliche Druckluftleitung, bezeichnet, die ein Druckmittel unter Druck liefert. Das Druckmittel ist über eine Leitung 101 mit einem Rückschlagventil 103 sowie ein Umschaltventil 108 auf den Hubzylinder 80 aufgeschaltet. Der Hubzylinder 80 weist einen zweiseitig druckbeaufschlagbaren Kolben 110 auf, der den Zylinder 112 in eine erste Zylinderkammer 114 auf der Seite der Kolbenstange 78 und eine der Kolbenstange 78 abgewandte zweite Zylinderkammer 116 unterteilt. Bei der dargestellten Stellung des Umschaltventils 108 ist die Druckmittelquelle mit der zweiten Zylinderkammer 116 verbunden. Die erste Zylinderkammer 114 steht mit der Atmosphäre in Verbindung. Der Kolben 110 und damit der Gegenhalter 76 wird dann nach links in Fig.5 verfahren, bis sich der Gegenhalter 76 mit einer durch den Druck der Druckmittelquelle bestimmten Andruckkraft an das Werkstück 32 anlegt. Wenn das Werkstück 32 von dem Druckstück 24 nach rechts in Fig.5 zurückgedrückt wird, wird das Druckmittel in der zweiten Zylinderkammer 116 komprimiert. Das Rückschlagventil 103 schließt. Der Druck des Druckmittels wird jetzt durch einen Druckregler 102, über den das Druckmittel abfließt, auf einen einstellbaren Wert geregelt. Die Druckeinstellung ist durch die Feder 104 symbolisiert. Der eingestellte Druck oder die dazu proportionale Andruckkraft kann an einem Manometer 106 abgelesen werden. Beim Hindurchdrücken des Werkstücks 32 durch das Werkzeug 34 wird somit ein konstanter Gegendruck auf den Gegenhalter 76 aufrechterhalten. Wenn das Werkstück 32 durch das Schneidwerkzeug 34 hindurchgedrückt ist, wird das Umschaltventil 108 durch einen (nicht dargestellten) Kontakt umgeschaltet. Nach Umschalten des Umschaltventils 108 wird die erste Zylinderkammer 114 mit dem Ausgang des Druckreglers 102 verbunden. Die zweite Zylinderkammer 116 wird mit der Atmosphäre verbunden. Dadurch wird der Gegenhalter 76 nach rechts in Fig.5 zurückgefahren. Dadurch kann der Auswerfer 82 das Werkstück 34 auswerfen.

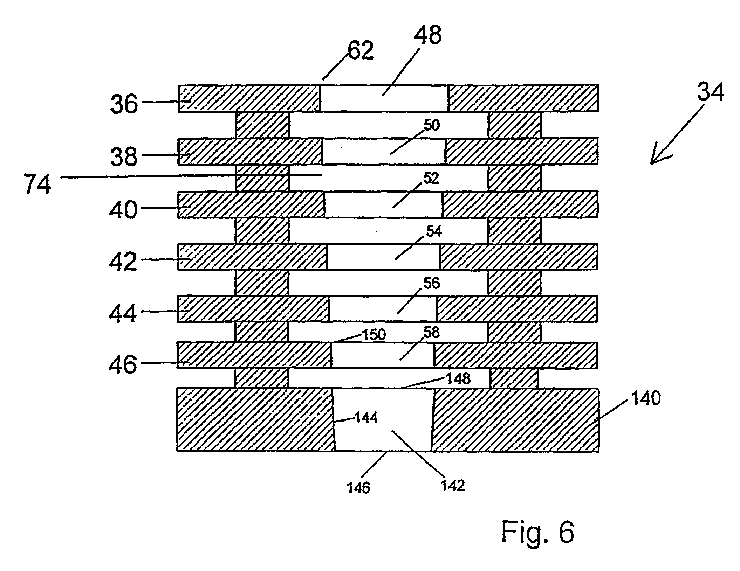

Bei der Abwandlung nach Fig.6 ist in Vorschubrichtung hinter dem Schneidwerkzeug 34 und fluchtend mit diesem ein Kalibrierwerkzeug 140 angeordnet. Das Kalibrierwerkzeug 140 weist einen Durchbruch 142 auf. Die Innenwandung 144 des Kalibrierwerkzeugs 140 verjüngt sich schwach in Vorschubrichtung, so daß der AustrittsQuerschnitt 146 des Kalibrierwerkzeugs 140 geringfügig -um Bruchteile eines Millimeters oder Hundertstelmillimeter- kleiner ist als der Eintritts-Querschnitt 148. Die Innenwandung 144 weist hohe Oberflächengüte auf.

Die Abmessungen des Eintritts-Querschnitts 148 des Durchbruchs 142 des Kalibrierwerkzeugs 140 an der in Vorschubrichtung vorderen Seite entsprechen denen der austrittseitigen, in Vorschubrichtung gesehen hinteren Schneidkante 150 des Schneidwerkzeugs 34. Die Abmessungen des Austritts-Querschnitts des Durchbruchs 142 an der rückwärtigen Austrittseite entsprechen den Sollmaßen des zu fertigenden Teiles.

Das Kalibrierwerkzeug 140 ist deutlich härter als die Schneidkanten z.B. 150 des Schneidwerkzeugs 34.

Durch das beschriebene Kalibrierwerkzeug 140 erfolgt eine geringfügige Kaltverformung des Werkstücks. Dadurch wird eine hohe Maßgenauigkeit des daraus erzeugten Teils gewährleistet. Durch die Kaltverformung wird das Material auf der Oberfläche verteilt und geglättet. Es ergibt sich eine hohe Oberflächengüte des Teils.

## Patentansprüche

1. Vorrichtung zum Herstellen von Teilen, die mit einem Außenprofil versehen sind, bei welcher ein Werkstück (32) mittels eines Druckstücks (24) in einer Vorschubrichtung (60) durch ein ringförmiges Schneidwerkzeug (34), gedrückt wird, das Schneidwerkzeug (34) eine Mehrzahl von Ringscheiben (36,38,40,42,44,46) mit inneren Schneidkanten (62) zur Materialabnahme von dem Werkstück (32) aufweist, die Ringscheiben (36,38,40,42,44,46) durch Abstandsstücke (126) im Abstand voneinander gehalten sind und die Schneidkanten (62) in Vorschubrichtung progressiv weiter vorspringen, wobei durch jede Schneidkante (62) Materialspäne abgenommen werden und die in Vorschubrichtung (60) letzte Schneidkante dem gewünschten Außenprofil des Teils entspricht, und wobei zwischen den Schneidkanten (62) Spankammern (74) zur Aufnahme der Späne gebildet sind, die über radiale Verbindungs-Öffnungen (128) mit dem Außenraum in Verbindung stehen, **dadurch gekennzeichnet, daß**
das Werkstück (32) durch einen Gegenhalter (76), der entgegen der Vorschubrichtung (60) in das Schneidwerkzeug (34) einfahrbar ist, mit einer Andruckkraft gegen das Druckstück (24) gedrückt wird und
der Gegenhalter (76) Spülmittelkanäle aufweist, über welche ein Spülmittel, vorzugsweise Druckluft, auf das Werkstück (32) geleitet wird, so daß Späne unmittelbar nach ihrer Bildung durch die Verbindungs-Öffnungen (128) nach außen abgefördert werden.

2. Vorrichtung nach Anspruch 1, **dadurch gekennzeichnet, daß** die Mittel zur Erzeugung einer Andruckkraft von einem mit Druckmittel betriebenen Hubzylinder (80) gebildet sind.

3. Vorrichtung nach Anspruch 2, **dadurch gekennzeichnet, daß** der die Andruckkraft bestimmende Druck des Hubzylinders (80) durch einen Druckregler (102) geregelt ist.

4. Vorrichtung nach Anspruch 3, **dadurch gekennzeichnet, daß** der Hubzylinder (80) einen zweiseitig beaufschlagbaren Kolben (110) enthält und durch ein Umschaltventil (108) umsteuerbar ist.

5. Vorrichtung nach einem der Ansprüche 1 bis 4, **dadurch gekennzeichnet, daß** das Druckstück (24) an einem auf Führungssäulen (18,20) geführten Schlitten (22) angebracht ist, der durch einen Hydraulik-Zylinder (28) in der Vorschubrichtung (60) verschiebbar ist.

6. Vorrichtung nach Anspruch 3, **dadurch gekennzeichnet, daß** in dem Druckstück (24) ein Auswerfer (82) zum Auswerfen des Werkstücks (32) geführt ist, der bei Erreichen einer Endstellung nach dem Durchdrücken des Werkstücks (32) durch das Schneidwerkzeug (34) von einem maschinenfesten Anschlag (36) über ein Gestänge (84,88) betätigbar ist.

## Claims

1. Device for making parts which have an outer profile, in which a workpiece (32) is pressed, by means of a thrust piece (24), in an advance direction (60) through an annular cutting tool, the cutting tool (34) has a plurality of annular discs (36,38,40,42,44,46) with inner cutting edges (62) for removing material from the workpiece (32), the annular discs (36,38,40,42,44,46) being held in spaced relationship by spacers (126), and the cutting edges, in advance direction, progressively project inwardly, material chips being removed by each cutting edge and the last cutting edge, in advance direction, corresponding to the desired outer profile of the part, and chip chambers (74) being defined between the cutting edges (62) for receiving chips, the chip chambers communicating with the outside through radial connecting openings (128), **characterised in that**
the workpiece (32) is urged against the thrust piece (24) with a contact pressure by means of a reaction plunger (76), which is adapted to be run-in into the cutting tool (34) against the advance direction (60), and
the reaction plunger (76) has flushing agent passages, through which flushing agent, preferably pressurised air, is directed onto the tool to transport the chips, immediately after they have been formed, through the connecting openings (128) to the outside.

2. Device as claimed in claim 1, **characterised in that** the means for generating the contact pressure are a fluid operated jack (80).

3. Device as claimed in claim 2, **characterised in that** the pressure of the jack (80) determining the contact pressure is controlled by a pressure controller.

4. Device as claimed in claim 3, **characterised in that** the jack (80) comprises a double-acting piston (110) and is reversible by means of a reversing valve (108).

5. Device as claimed in anyone of the claims I to 4, **characterised in that** the thrust piece (24) is attached to slide block (22) guided on guiding columns (18,20), the slide block being displaceable in advance direction (60) by a hydraulic jack (28).

6. Device as claimed in claim 3, **characterised in that** an ejector (82) for ejecting the workpiece (32) is guided in the thrust piece (24), the ejector being actuated, when reaching its end position after the workpiece has been pressed through the cutting tool (34), by a machine-fixed stop (36) through a rod assembly (84,88).

## Revendications

1. Dispositif destiné à fabriquer des éléments pourvus d'un profil extérieur pour lequel une pièce à usiner (32) est pressée à travers un outil tranchant annulaire (34) dans un sens d'avancement (60) au moyen d'une pièce de pression (24), l'outil tranchant (34) présente plusieurs disques annulaires (36,38,40,42,44,46) munis d'arêtes tranchantes internes (62) destinées à enlever la matière de la pièce à usiner (32), les disques annulaires (36,38,40,42,44,46) sont maintenus avec un écart les uns des autres par des écarteurs (126) et les arêtes tranchantes (62) font saillie au fur et à mesure du sens d'avancement, des copeaux de matière étant enlevés par chacune des arêtes tranchantes (62) et la dernière arête tranchante dans le sens d'avancement (60) correspondant au profil extérieur souhaité de l'élément, et des logements de copeaux (74) destinés à recueillir les copeaux et reliés avec l'extérieur par l'intermédiaire d'orifices de raccordement radiaux (128) étant formés entre les arêtes tranchantes (62), **caractérisé en ce que**
la pièce à usiner (32) est pressée avec une force de pression contre la pièce de pression (24) par un contre-support (76) susceptible d'être déplacé à l'intérieur de l'outil tranchant (34) à l'encontre du sens d'avancement (60) et
le contre-support (76) présente des canaux pour agent lavant par l'intermédiaire desquels un agent lavant, de préférence de l'air comprimé, est guidé sur la pièce à usiner (32) de sorte que les copeaux sont évacués vers l'extérieur par les orifices de raccordement (128) juste après leur formation.

2. Dispositif selon la revendication 1, **caractérisé en ce que** les moyens destinés à générer une force de pression sont formés par un cylindre de levage (80) actionné par un agent de pression.

3. Dispositif selon la revendication 2, **caractérisé en ce que** la pression du cylindre de levage (80) déterminant la force de pression est réglée par un régulateur de pression (102).

4. Dispositif selon la revendication 3, **caractérisé en ce que** le cylindre de levage (80) comprend un piston (110) susceptible d'être pressurisé des deux côtés, et est susceptible d'être inversé par une soupape d'inversion (108).

5. Dispositif selon l'une des revendications 1 à 4, **caractérisé en ce que** la pièce de pression (24) est placée sur un chariot (22) guidé sur des colonnes de guidage (18,20) et susceptible d'être déplacé dans le sens d'avancement (60) par un cylindre hydraulique (28).

6. Dispositif selon la revendication 3, **caractérisé en ce qu'**un éjecteur (82) destiné à éjecter la pièce à usiner (32) est guidé dans la pièce de pression (24), l'éjecteur étant susceptible d'être actionné par l'intermédiaire de tiges (84,88) par une butée (36) fixe par rapport à la machine lorsqu'il atteint une position finale après que la pièce à usiner (32) a été pressée à travers l'outil tranchant (34).
